**Europäisches Patentamt**

**European Patent Office**

**Office européen des brevets**

(19)

(11) Veröffentlichungsnummer : **0 529 475 B1**

(12)                     **EUROPÄISCHE PATENTSCHRIFT**

(45) Veröffentlichungstag der Patentschrift :
05.07.95 Patentblatt 95/27

(51) Int. Cl.⁶ : **H02G 15/04, H02G 1/08,**
**G02B 6/44**

(21) Anmeldenummer : **92114040.6**

(22) Anmeldetag : **18.08.92**

(54) **Zugfeste Kabel-Endabschlussdichtung.**

(30) Priorität : **28.08.91 DE 4128517**
**19.12.91 DE 4142096**

(43) Veröffentlichungstag der Anmeldung :
**03.03.93 Patentblatt 93/09**

(45) Bekanntmachung des Hinweises auf die
Patenterteilung :
**05.07.95 Patentblatt 95/27**

(84) Benannte Vertragsstaaten :
**AT BE CH DE DK ES FR GB GR IT LI LU MC NL**
**PT SE**

(56) Entgegenhaltungen :
**EP-A- 0 392 089**
**DE-A- 2 325 436**
**DE-A- 2 638 110**
**DE-U- 8 812 643**
**FR-A- 1 520 148**
**GB-A- 198 307**
**GB-A- 377 149**

(73) Patentinhaber : **Cellpack AG**
**Zentralstrasse 21**
**5610 Wohlen (CH)**

(72) Erfinder : **Bauer, Wolfgang-Volker, Dipl.-Ing.**
**Obere Haspelstrasse 26**
**W-7890 Waldshut-Tiengen 1 (DE)**
Erfinder : **Brenner, Otto, Dipl.-Ing.**
**Mozartstrasse 48**
**W-7890 Waldshut-Tiengen 1 (DE)**
Erfinder : **Kretschmar, Frank-Michael,**
**Dipl.-Chem.**
**Am Wasserschloss 8**
**W-7899 Ühlingen-Berau (DE)**
Erfinder : **Mitschak, Henry**
**Mecklenburger Strasse 7**
**W-7890 Waldshut-Tiengen 2 (DE)**

(74) Vertreter : **Allgeier, Kurt**
**Obertorplatz 7**
**CH-4310 Rheinfelden (CH)**

## Beschreibung

Die Erfindung betrifft eine Kabel-Endabschlussdichtung für zylinderisch kunststoffummantelte Strom- oder Lichtleiter, die als druckluft- und feuchtigkeitsdichte, auf das abzudichtende Kabelende aufschiebbare und mit der Kabelummantelung ohne eine Füllung mit Vergussmasse dicht verbindbare Kappe ausgebildet ist. Derartige Kabel-Endabschlussdichtungen finden eine breite Anwendung, beispielsweise bei der Verlegung von Leerkabeln, deren Enden gegen Schmutz und Feuchtigkeit geschützt werden müssen.

Bei einer bekannten Art dieser Kabel-Endabschlussdichtungen besteht die das Kabelende übergreifende Kappe aus einem wärmeschrumpfbaren Material mit einer Innenbeschichtung aus einem Heisskleber. Die Nachteile dieser bekannten Art bestehen in der aufwendigen Herstellung und insbesondere in der aufwendigen, ein fachgerechtes Vorgehen erfordernden Montage, bei der das Kabelende vor dem Aufschrumpfen und Verkleben zuvor gereinigt und die Kappe mittels einer mitgeführten Wärmequelle, beispielsweise einem Propangasbrenner oder einer Heissluftpistole, geschrumpft werden muss. Weitere Nachteile dieser bekannten Art bestehen darin, dass bei der Weiterverarbeitung des Kabels die Kappe nicht gelöst werden kann und somit das Kabelende abgetrennt werden muss und dass die Kappe nicht wiederverwendbar ist.

Aus der GB-A-198 307 ist eine Ausbildungsweise zu entnehmen, die als Endkappe für die Kabelenden von drei Kabeln dient, und die einen stark konischen und einen an diesen anschliessenden zylindrischen Innengewindeteil aufweist. Dieser dient zum Eindrehen der schraubenförmig zu zylindrischen Gebilde zusammengedrehten blanken Leiterenden der drei Kabel, während deren Isoliermantel in den äusseren, stark konischen Gewindeteil eingedreht wird. Dabei kann die Dichtwirkung noch dadurch verbessert werden, dass die Gewinde vor dem Eindrehen der Kabel mit einem Dichtmittel bestrichen werden, welches beispielsweise Paraffin enthalten kann.

Aus der DE 39 11 688 A 1 ist eine mehrteilige, mittels einer Kupplungseinrichtung zusammensetzbare Kabel-Endabschlussdichtung bekannt, bei der ein darin eingesetzter Dichtungsring das Kabelende dichtend umschliesst. Diese Bauweise hat die Nachteile einer sehr aufwendigen Herstellung und einer auf Grund der mehrteiligen Bauweise unpraktischen Montage.

Für vieladrige elektrische Kabel ist aus der DE-OS 23 25 436 eine zugfeste Endabschlussdichtung bekanntgeworden, bei der eine auf das Kabelende aufgeschobene Kappe auf den Kabelmantel aufgequetscht wird. Jedoch können trotz mehrerer umfangsversetzter Quetschungen Undichtigkeiten nicht mit Sicherheit vermieden werden, wenn auf der Hohlwandung der Kappe Vorsprünge wie Riefen, Sicken, Spitzen oder Zacken angebracht sind. Um Undichtigen zu Vermeiden, wird weiter vorgeschlagen, in der Aufschiebekappe zentral einen Bolzen anzuordnen, der in das Kabelende axial eingetrieben wird, um durch Aufweiten des Kabeldurchmessers eine bessere Anlage des Kabelmatels an der inneren Kappenwandung zu bewirken.

Ausgehend von diesem Stand der Technik besteht die Aufgabe der Erfindung darin, eine Kabel-Endabschlussdichtung zu schaffen, die mit einem geringen Aufwand herstellbar ist und einfach, schnell und ohne weitere oder besondere Hilfsmittel montierbar sowie wiederverwendbar ist, und die auch ohne Vergussmasse zuverlässig dicht und zugfest ist.

Die erfindungsgemässe Lösung bei einer Kabel-Endabschlussdichtung für zylinderisch kunststoffummantelte Strom- oder Lichtleiter, die als druckluft- und feuchtigkeitsdichte, auf das abzudichtende Kabelende aufschiebbare und mit der Kabelummantelung ohne eine Füllung mit Vergussmasse dicht verbindbare Kappe ausgebildet ist, besteht darin, dass die einstückige Kappe eine sich konisch verengende Sacklochbohrung aufweist, deren Öffnungsdurchmesser grösser und deren Sackloch-Enddurchmesser kleiner als der Aussendurchmesser des Kabels ist und die mit einem konisch verlaufenden Innengewinde versehen ist, dessen Steigung das 0,3-fache bis 3,0-fache des Aussendurchmessers des Kabels und dessen Gewindehöhe zwischen dem 0,1-fachen und 0,9-fachen der Dicke der Kabelummantelung, vorzugsweise etwa das 0,5-fache beträgt.

Wird das Kabelende in die konische Sacklochbohrung der Kappe eingeführt und die Kappe gedreht, so bewirkt das Einschneiden oder Eindrücken des Gewindes in die Kabelummantelung in Verbindung mit der Schraubbewegung, dass das Kabelende weiter in die konische Sacklochbohrung hineingezogen wird und schliesslich mit seiner Ummantelung an der Wandfläche der konischen Sacklochbohrung dichtend anliegt.

Zum Lösen der Kappe ist diese einfach in umgekehrter Drehrichtung wieder abzuschrauben. Durch eine geeignete Wahl von Länge, Öffnungs- und Enddurchmesser der konischen Sacklochbohrung lässt sich die Anpassung an den Kabeldurchmesser und Kabeltyp erreichen. Die Kabel-Endabschlussdichtung kann dabei auch derart ausgebildet werden, dass sie zur Abdichtung von Kabeln mit verschiedenen Aussendurchmessern verwendbar ist.

Das Innengewinde ist so ausgebildet, dass seine Steigung das 0,3-fache bis 3,0-fache des Aussendurchmessers des Kabels beträgt. Die Steigung kann konstant sein, aber es kann auch vorteilhaft sein, wenn sie zum Enddurchmesser hin kleiner wird, insbesondere wenn die Kabel-Endabschlussdichtung für die Verwendung auf verschiedenen Kabeln mit stark unterschiedlichen Aussendurchmessern ausgebildet ist.

EP 0 529 475 B1

Die Gewindehöhe des Innengewindes beträgt zwischen dem 0,1-fachen und 0,9-fachen der Dicke der Kabelummantelung, vorzugsweise etwa das 0,5-fache, mit dem Vorteil, daß das Gewinde zum einen den festen Halt der Kappe auf dem Kabelende bewirkt und zum anderen das Aufschneiden des Gewindes auf die Kabelummantelung weder grosse Kräfte erfordert noch eine Beschädigung der elektrischen Leiter im Kabelinneren auftritt.

Eine erste vorteilhafte Ausbildung besteht darin, dass das Innengewinde ein scharfkantiges Spitzgewinde mit einem Flankenwinkel $\beta$ zwischen 25° und 60° ist. Wenn das Gewinde selbstschneidend ist, kann es sich mit geringem Kraftaufwand in die Kabelummantelung einschneiden oder eindrücken.

Eine weitere vorteilhafte Ausbildung besteht darin, dass sich zwischen den um die Steigung des Innengewindes beabstandet verlaufenden Gewindegängen jeweils ein konischer Abschnitt der sich konisch verengenden Sacklochbohrung befindet. Die Vorteile dieser Ausbildung bestehen zum einen darin, dass in diesen glatten konischen Abschnitten der Aussenmantel des Kabels dichtend anliegen kann, und zum anderen darin, dass eine hohe Steigung des Gewindes verwirklicht werden kann, wodurch die Kappe mit nur wenigen Umdrehungen und geringem Kraftaufwand dichtend aufschraubbar ist. Bei einem üblichen Gewinde mit jeweils unmittelbar aufeinanderfolgenden Gewindegängen ohne dazwischenliegenden, zylindrischen bzw. konischen Abschnitten sind diese Vorteile nur bedingt erzielbar.

Eine bevorzugte Ausbildung ist darin zu sehen, dass sich an eine der beiden Flanken des Innengewindes die eine Flanke eines in die konische Sacklochbohrung vertieft eingeschnittenen, konisch verlaufenden Aussengewindes anschliesst. Hierdurch wird erreicht, dass das Material der Kabelummantelung während des Aufschraubens der Kappe auf das Kabelende in das Aussengewinde gepresst wird. Dadurch erfordert des Aufschrauben einen verringerten Kraftaufwand und es wird über die gesamte Strecke des Gewindes eine besonders gute Abdichtung erzielt. Besonders vorteilhafte Ausbildungen mit hoher Dichtwirkung bestehen dabei darin, dass das Gewinde als Spitzgewinde oder Sägengewinde ausgebildet ist. Als besonders vorteilhaft ist ferner anzusehen, wenn die Gewindetiefe des Aussengewindes nicht grösser als die Gewindehöhe des Innengewindes ist und wenn das Aussengewinde bei einer in die konische Sacklochbohrung gerichteten Blickrichtung hinter dem Innengewinde verläuft.

Nach einer weiteren vorteilhaften Ausführungsart wird vorgeschlagen, dass das Innengewinde auf jeder vollen Gewindesteigung wenigstens einen Unterbrechungsabschnitt des erhabenen Gewindegangs aufweist. Durch die unterbrochene Gestaltung des Gewindes kann durch einen Selbstheilungseffekt das angeschnittene oder eingedrückte Material der Kabelummantelung nach dem Aufschrauben der Kappe auf das Kabel ende zurückfliessen, wodurch ein verstärktes Festhalten der Kappe auf dem Kabelende erreicht wird. Das Losschrauben erfordert dann eine erhöhte, dem Rückschneiden eines Gewindes vergleichbare Kraft.

Eine vorteilhafte Weiterbildung kann noch darin bestehen, dass die sich konisch verengende Sacklochbohrung im Bereich wenigstens eines Unterbrechungsabschnitts des Innengewindes wenigstens einen konzentrischen, erhabenen Innenring aufweist.

Die erhabenen Innenringe bewirken dabei eine verbesserte Quetschdichtung.

Eine vorteilhafte Ausbildung der einstückig geformten Kabel-Endabschlussdichtung besteht darin, dass die konische Sacklochbohrung erhabene konzentrische Innenringe und Gewindeabschnitte aufweist. Durch diese Ausbildung wird erreicht, dass das Kabelende quer zur Kabellängsachse durch diese Innenringe abgedichtet wird, wobei keine Unterbrechung des Dichtelements vorgesehen ist. An diesen Stellen des Kabelendes wird der Kabelmantel stärker verpresst als in den zwischen den Innenringen konisch verlaufenden glatten Abschnitten der Sacklochbohrung. Die zwischen den Innenringen konisch verlaufenden erhabenen Gewindeabschnitte dienen dem festen Sitz der Kabel-Endabschlussdichtung. Beim Aufschrauben der Kappe wird das Kabelende in die Kappe geführt und gehalten.

Eine weitere vorteilhafte Ausbildung besteht darin, dass der erhabene Innenring scharfkantig ist und einen Flankenwinkel zwischen 90° und 150° aufweist, und eine abgewandelte vorteilhafte Ausbildung ist darin zu sehen, dass das Innengewinde ein scharfkantiges Gewinde mit einem Flankenwinkel zwischen 90° und 150° ist. Damit wird eine grosse Abdichtung im oberen Bereich der Flanken der erhabenen innenringe erreicht und gleichzeitig gewährleistet, dass das Innengewinde das Kabelende in das innere der konischen Sacklochbohrung pressen.

Nach einer anderen besonders vorteilhaften Ausführungsart wird vorgeschlagen, dass zwischen mindestens zwei erhabenen Innenringen ein Unterbrechungsabschnitt des Innengewindes vorgesehen ist, der einen konischen Abschnitt der sich konisch verengenden Sacklochbohrung bildet. Der Vorteil dieser Ausbildung mit den glatten, ununterbrochenen Oberflächen der konischen Abschnitte besteht darin, dass in diesen Abschnitten eine dichtende Verbindung mit dem Aussenmantel des Kabelendes herstellbar ist. Das Innengewinde bewirkt ein sicheres und abdichtendes Hineinpressen des Kabelendes in die Kabel-Endabschlussdichtung. Diese Abdichtung ist mit nur wenigen Umdrehungen und mit geringem Kraftaufwand gewährleistet. Bei einem üblichen Gewinde mit jeweils unmittelbar aufeinanderfolgenden Gewindegängen ohne dazwischenliegenden, zylindrischen bzw. konischen Abschnitten sind diese Vorteile nur bedingt erzielbar.

Ferner ist ein Vorschlag vorteilhaft, dass die Gewindehöhe des Innengewindes und die Steghöhe der erhabenen Innenringe zwischen dem 0,1-fachen und 0,9-fachen der Dicke der Kabelummantelung, vorzugsweise etwa das 0,5-fache beträgt, damit das Innengewinde und die erhabenen Innenringe zum einen den festen Halt der Kappe auf dem Kabelende bewirken und zum anderen bei der Montage der Kabel-Endabschlussdichtung auf das Kabelende weder grosse Kräfte erforderlich sind noch Beschädigungen der elektrischen Leiter oder der Lichtleiter im Kabelinneren auftreten können.

Zur einfachen Handhabung der Kabel-Endabschlussdichtung wird vorgeschlagen, dass die Kappe an ihrer Aussenfläche mit einem Profil versehen ist, das einen form- oder kraftschlüssigen Angriff von Werkzeugen und/oder den Händen eines Monteurs gestattet. Eine vorteilhafte Ausbildung kann darin bestehen, dass das Profil in axialer Richtung verlaufende Längsrippen umfasst. Eine andere vorteilhafte Ausbildung, die den Einsatz eines Schraubenschlüssels zum Auf- oder Abschrauben der Kabel-Endabschlussdichtung gestattet, ist noch darin zu sehen, dass am Aussenende der Kappe ein als Vier- oder Sechskant ausgebildeter Schraubansatz angeordnet ist.

Die Kabel-Endabschlussdichtung ist in einer bevorzugten Ausbildung aus Kunststoff hergestellt, da hierdurch mit einem geringen Fertigungsaufwand, beispielsweise in einem Spritzformverfahren, grosse Stückzahlen herstellbar sind. Sie kann in einer zweckmässigen Ausbildung auch aus Metall hergestellt sein.

Die Vorteile einer Kabel-Endabschlussdichtung nach der Erfindung gegenüber dem Stand der Technik bestehen darin, dass sie durch ihre besondere geometrische, einstückige Gestaltung einen wirksamen druckluft- und feuchtigkeitsdichten Abschluss von Kabelenden bewirkt, ohne Hilfsmittel und ohne besondere fachliche Unterweisung des Monteurs schnell und einfach auf ein Kabelende montierbar ist sowie bei Bedarf wieder abgeschraubt und zudem wiederverwendet werden kann.

Die in der Zeichnung dargestellten Ausführungsbeispiele der Erfindung lassen weitere Merkmale und Besonderheiten erkennen, die im folgenden näher beschrieben und erläutert sind.

Es zeigen

Fig. 1    eine Seitenansicht einer erfindungsgemässen Kabel-Endabschlussdichtung auf einem Kabel;
Fig. 2    einen Längsschnitt durch die Darstellung in Fig. 1 mit einer zusätzlichen Zugöse;
Fig. 3    eine Einzelheit bei x aus Fig. 2;
Fig. 4    einen Teilquerschnitt A-A' gemäss Fig. 2;
Fig. 5    einen Längsschnitt gemäss Fig. 2 in abgewandelter Ausführung;
Fig. 6    eine Einzelheit bei y aus Fig. 5;
Fig. 7    eine Seitenansicht gemäss Fig. 5.

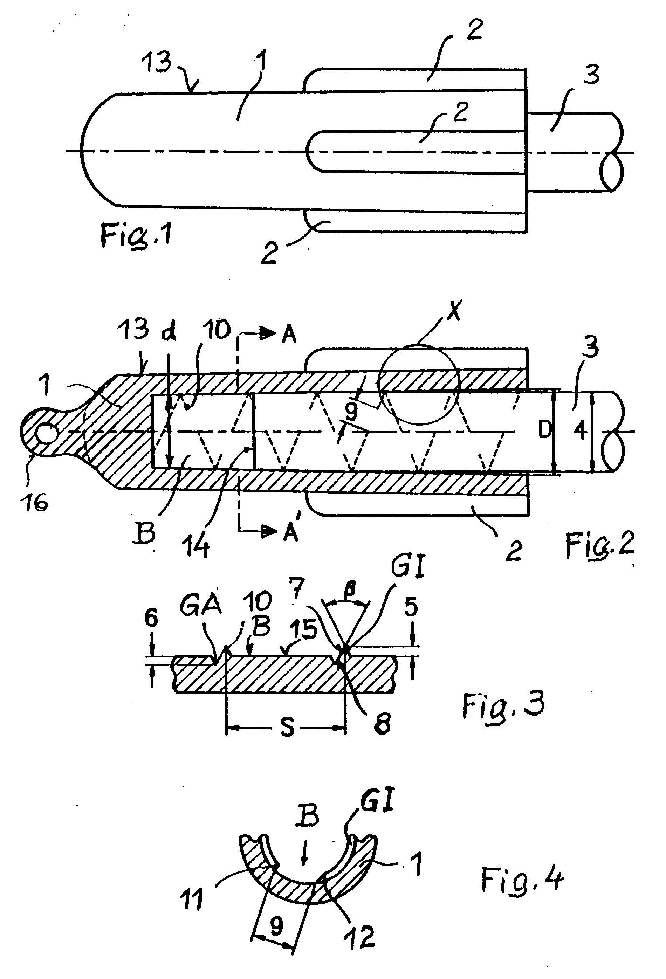

In den Fig. 1 bis 7 ist die Kappe der Kabel-Endabschlussdichtung mit 1 bezeichnet. In Fig. 1 ist die einstückige Kappe 1 auf ein Kabel 3 aufgeschraubt. Zur Verbesserung der Handhabung sind auf der Aussenfläche 13 axial verlaufende Rippen 2 angeordnet, die mit der Hand, einem Schraubenschlüssel oder einer Zange gegriffen werden können. In einer anderen Ausbildung kann auch an dem Aussenende ein nicht dargestellter, als Vier- oder Sechskant ausgebildeter Schraubansatz angebracht sein.

Die Fig. 2 zeigt die sich konisch verengende Sacklochbohrung B, die sich von einem Öffnungsdurchmesser D, der grösser als der Aussendurchmesser 4 des Kabels 3 ist, auf den Enddurchmesser d, der kleiner als der Aussendurchmesser 4 des Kabels 3 ist, verengt und die mit durch schräge Striche angedeuteten erhabenen Gewindegängen 10 versehen ist. Die Kappe 1 ist so weit über das Kabelende 14 des Kabels 3 geschraubt, dass dessen Ummantelung dichtend an der konischen Sacklochbohrung B anliegt. Die erhabenen Gewindegänge 10 weisen Unterbrechungsabschnitte 9 auf. Am Kopf der Kappe ist in einer besonderen Ausführungsform ein Öse 16 zur Durchführung von Kabelzugarbeiten angebracht.

In Fig. 3 ist in einer Einzelheit aus Fig. 2 die Ausbildung des Gewindes als Spitzgewinde mit dem Flankenwinkel $\beta$ der erhabenen Gewindegänge 10 von der Gewindehöhe 5 und der Steigung S dargestellt. An eine der Flanken 7 des Innengewindes GI schliesst sich die eine Flanke 8 eines in die konische Sacklochbohrung B vertieft eingeschnittenen, konisch verlaufenden Aussengewindes GA an. Zwischen den um die Steigung S beabstandet verlaufenden erhabenen Gewindegängen 10 befindet sich jeweils ein konischer Abschnitt 15 der konischen Sacklochbohrung B, der keine Gewindegänge aufweist. Beim Aufschrauben der Kappe auf die Kabelummantelung am Kabelende 14 wird dessen Material in die Gewindevertiefungen gepresst und somit eine zusätzliche Abdichtung erzielt.

Die Gewindetiefe 6 des Aussengewindes GA ist nicht grösser als die Gewindehöhe 5 des Innengewindes GI und die Gänge des Aussengewindes GA sind bei einer in die konische Sacklochbohrung B gerichteten Blickrichtung hinter den erhabenen Gewindegängen 10, d.h. in der Darstellung links von diesen angeordnet. Das Gewinde ist selbstschneidend und die Gewindehöhe 5 ist so bemessen, dass das Innengewinde GI nicht die Kabelummantelung durchdringt.

In Fig. 4 ist das eine rechtsdrehende Gewinde dargestellt, bei dem an den Unterbrechungsabschnitten 9 die erhabenen Gewindegänge 10 an ihrem vorderen Ende 12 kufenförmig als Schneiden ausgebildet und an ihrem hinteren Ende 11 rechtwinklig zur Tangentenrichtung flächig abgekantet sind. Für ein Linksgewinde wäre in dieser Darstellung das vordere Ende 12 mit dem hinteren Ende 11 zu vertauschen. An den Unterbrechungsabschnitten 9 kann das eingeschnittene oder eingedrückte Material der Kabelummantelung in einem Selbstheilungsprozess zurückfliessen, wodurch ein besonderer Halteeffekt erreicht wird.

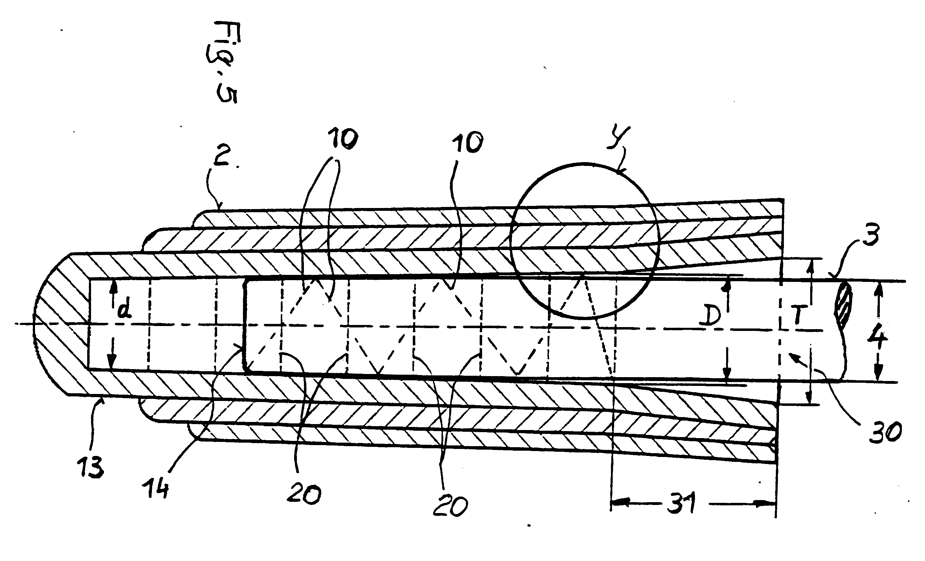

Die Fig. 5 zeigt in einem Längsschnitt durch die in Fig. 1 dargestellte Kabel-Endabschlussdichtung die sich konisch verengende Sacklochbohrung B, die sich von einem Öffnungsdurchmesser D, der grösser als der Aussendurchmesser 4 des Kabels 3 ist, auf den Enddurchmesser d, der kleiner als der Aussendurchmesser 4 des Kabels 3 ist, verengt und die mit durch schräge Striche angedeuteten erhabenen Gewindegängen 10 versehen ist. Die Kappe 1 ist so weit über das Kabelende 14 des Kabels 3 geschraubt, dass dessen Ummantelung dichtend an den glatten konischen Abschnitten der Sacklochbohrung B zwischen den erhabenen Innenringen 20 sowie den Flanken der Innenringe 20 selbst anliegt. Der konischen Sacklochbohrung B mit dem Öffnungsdurchmesser D ist ein sich zu einer vergrösserten Einsecköffnung 30 mit dem Durchmesser T, der grösser als der Öffnungsdurchmesser D ist, erstreckender, konisch erweiterter Einführabschnitt 31 mit stärkerer Konizität vorgeschaltet. Damit wird eine sichere Zentrierung des Kabelendes 14 in der Sacklochbohrung B erreicht und gleichzeitig ein kreisförmiger Kabelquerschnitt gewährleistet.

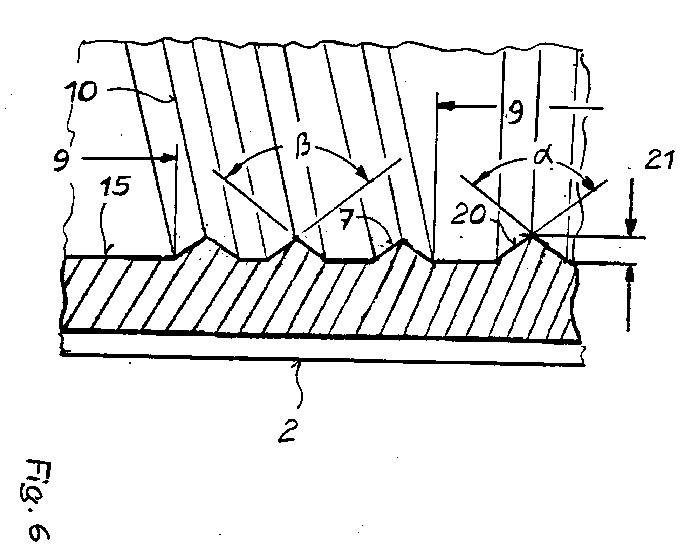

In Fig. 6 ist in einer Einzelheit aus Fig. 5 die Ausbildung des Innengewindes GI mit dem Flankenwinkel $\beta$ der erhabenen Gewindegänge 10 dargestellt. Ferner sind die erhabenen Innenringe 20 mit dem Flankenwinkel $\alpha$ und der Steghöhe 21 erkennbar. Zwischen den erhabenen Innenringen 20 kann sich ein konischer Abschnitt 15 der konischen Sacklochbohrung B mit einem Unterbrechungsabschnitt 9 befinden, der keine Gewindegänge aufweist.

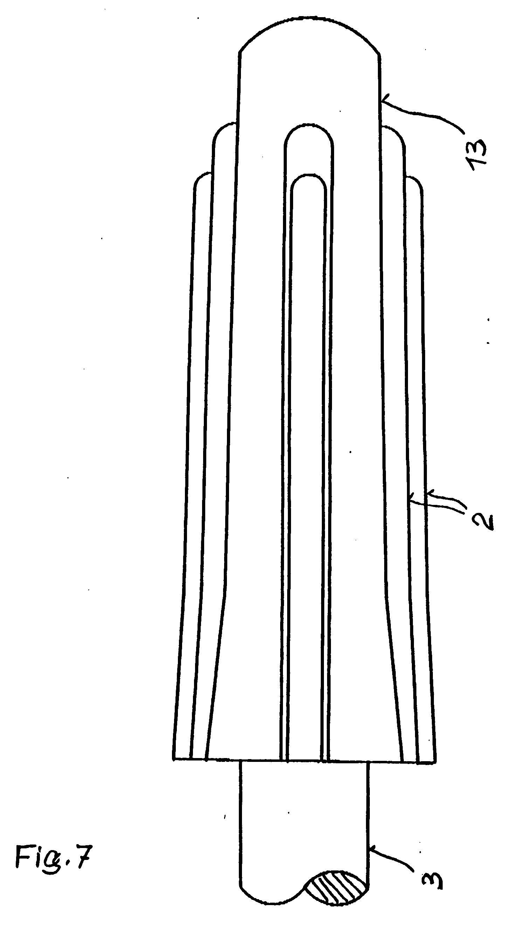

In Fig. 7 ist die einstückige Kappe 1 auf einem Kabel 3 aufgeschraubt ist. Zur Verbesserung der Handhabung sind auf der Aussenfläche 13 axial verlaufende Rippen 2 angeordnet, die mit der Hand, einem Schraubenschlüssel oder einer Zange gegriffen werden können. In einer anderen Ausbildung kann auch an dem Aussenende ein nicht dargestellter, als Vier- oder Sechskant ausgebildeter Schraubansatz angebracht sein.

EP 0 529 475 B1

| AKTE – CASE | STICHWORT – key-word | | BEZUGS–ZEICHEN–LISTE Bl.1 | |
|---|---|---|---|---|
| 4458 EP | Endabschlussdichtung | | ANMELDER Cellpack AG, Wohlen | |
| POS. | BENENNUNG / DESIGNATION | POS. | BENENNUNG / DESIGNATION | |
| 1 | Kappe | 59 | | |
| 2 | Längsrippe | 60 | | |
| 3 | Kabel | 61 | | |
| 4 | Aussendurchmesser | 62 | | |
| 5 | Gewindehöhe | 63 | | |
| 6 | | 64 | | |
| 7 | Flanke-Innengewinde | 65 | | |
| 8 | Flanke-Aussengewinde | 66 | | |
| 9 | Unterbrechungsabschnitt | 67 | | |
| 10 | Gewindegang | 68 | | |
| 11 | hinteres Ende | 69 | | |
| 12 | vorderes Ende | 70 | | |
| 13 | Aussenfläche | 71 | | |
| 14 | Kabelende | 72 | | |
| 15 | konischer Abschnitt | 73 | | |
| 16 | Öse | 74 | | |
| 17 | | 75 | | |
| 18 | | 76 | | |
| 19 | | 77 | | |
| 20 | Innenring | 78 | | |
| 21 | Steghöhe | 79 | | |
| 22 | | 80 | | |
| 23 | | 81 | | |
| 24 | | 82 | | |
| 25 | | 83 | | |
| 26 | | 84 | | |
| 27 | | 85 | | |
| 28 | | 86 | | |
| 29 | | 87 | | |
| 30 | Einsteckhöhe | 88 | | |
| 31 | Einführabschnitt | 89 | | |
| 32 | | 90 | | |
| 33 | | 91 | | |
| 34 | | 92 | | |
| 35 | | 93 | | |
| 36 | | 94 | | |
| 37 | | 95 | | |
| 38 | | 96 | | |
| 39 | | 97 | | |
| 40 | | 98 | | |
| 41 | | 99 | | |
| 42 | | | | |
| 43 | | d | Sackloch-Enddurchmesser | |
| 44 | | | | |
| 45 | | B | Sacklochbohrung | |
| 46 | | D | Öffnungsdurchmesser | |
| 47 | | GA | Aussengewinde | |
| 48 | | GI | Innengewinde | |
| 49 | | S | Steigung | |
| 50 | | | | |
| 51 | | α | Flankenwinkel | |
| 52 | | β | Flankenwinkel | |
| 53 | | | | |
| 54 | | | | |
| 55 | | | | |
| 56 | | | | |
| 57 | | | | |
| 58 | | | | |

6

## Patentansprüche

1. Kabel-Endabschlussdichtung für zylinderisch kunststoffummantelte Strom- oder Lichtleiter (3), die als druckluft- und feuchtigkeitsdichte, auf das abzudichtende Kabelende (14) aufschiebbare und mit der Kabelummantelung ohne eine Füllung mit Vergussmasse dicht verbindbare Kappe (1) ausgebildet ist, dadurch gekennzeichnet, dass die einstückige Kappe (1) eine sich konisch verengende Sacklochbohrung (B) aufweist, deren Öffnungsdurchmesser (D) grösser und deren Sackloch-Enddurchmesser (d) kleiner als der Aussendurchmesser (4) des Kabels (3) ist und die mit einem konisch verlaufenden Innengewinde (GI) versehen ist, dessen Steigung (S) das 0,3-fache bis 3,0-fache des Aussendurchmessers (4) des Kabels (3) und dessen Gewindehöhe (5) zwischen dem 0,1-fachen und 0,9-fachen der Dicke der Kabelummantelung, vorzugsweise etwa das 0,5-fache beträgt.

2. Kabel-Endabschlussdichtung nach Anspruch 1, dadurch gekennzeichnet, dass das Innengewinde (GI) ein scharfkantiges Spitzgewinde mit einem Flankenwinkel β zwischen 25° und 60° ist.

3. Kabel-Endabschlussdichtung nach Anspruch 1, dadurch gekennzeichnet, dass sich zwischen den um die Steigung (S) des Innengewindes (GI) beabstandet verlaufenden Gewindegängen jeweils ein konischer Abschnitt (15) der sich konisch verengenden Sacklochbohrung (B) befindet.

4. Kabel-Endabschlussdichtung nach Anspruch 1, dadurch gekennzeichnet, dass sich an eine der beiden Flanken (7) des Innengewindes (GI) die eine Flanke (8) eines in die konische Sacklochbohrung (B) vertieft eingeschnittenen, konisch verlaufenden Aussengewindes (GA) anschliesst.

5. Kabel-Endabschlussdichtung nach Anspruch 1, dadurch gekennzeichnet, dass das Innengewinde (GI) auf jeder vollen Gewindesteigung wenigstens einen Unterbrechungsabschnitt (9) des erhabenen Gewindegangs (10) aufweist.

6. Kabel-Endabschlussdichtung nach Anspruch 5, dadurch gekennzeichnet, dass die erhabenen Gewindegänge (10) an den Unterbrechungsabschnitten (9) an ihrem in der Aufschraubdrehrichtung gesehen vorderen Ende (12) kufenförmig als Schneiden angeschrägt sind.

7. Kabel-Endabschlussdichtung nach Anspruch 5, dadurch gekennzeichnet, dass die Gewindegänge (10) des Innengewindes (GI) an den Unterbrechungsabschnitten (9) an ihrem in Aufschraubdrehrichtung gesehen hinteren Ende (11) rechtwinklig zur Tangentenrichtung flächig abgekantet sind.

8. Kabel-Endabschlussdichtung nach wenigstens einem der Ansprüche 1 bis 7, dadurch gekennzeichnet, dass das Innengewinde (GI) oder das Innen- und das Aussengewinde (GI/GA) als scharfkantiges Sägengewinde mit einem Flankenwinkel zwischen 15° und 30° geformt ist.

9. Kabel-Endabschlussdichtung nach Anspruch 5, dadurch gekennzeichnet, dass die sich konisch verengende Sacklochbohrung (B) im Bereich wenigstens eines Unterbrechungsabschnitts des Innengewindes (GI) wenigstens einen konzentrischen, erhabenen Innenring (20) aufweist.

10. Kabel-Endabschlussdichtung nach Anspruch 9, dadurch gekennzeichnet, dass der erhabene Innenring (20) scharfkantig ist und einen Flankenwinkel (α) zwischen 90° und 150° aufweist.

11. Kabel-Endabschlussdichtung nach Anspruch 9, dadurch gekennzeichnet, dass das Innengewinde (GI) ein scharfkantiges Gewinde mit einem Flankenwinkel (β) zwischen 90° und 150° ist.

12. Kabel-Endabschlussdichtung nach Anspruch 9, dadurch gekennzeichnet, dass zwischen mindestens zwei erhabenen Innenringen (20) ein Unterbrechungsabschnitt (9) des Innengewindes (GI) vorgesehen ist, der einen konischen Abschnitt (15) der sich konisch verengenden Sacklochbohrung (B) bildet.

13. Kabel-Endabschlussdichtung nach Anspruch 9, dadurch gekennzeichnet, dass die Steigung (S) des Innengewindes (GI) das 0,25-fache bis 1,5-fache des Aussendurchmessers (4) des Kabels (3) beträgt.

14. Kabel-Endabschussdichtung nach Anspruch 9, dadurch gekennzeichnet, dass die Gewindehöhe (5) des Innengewindes (GI) und die Steghöhe (21) der erhabenen Innenringe (20) zwischen dem 0,1-fachen und 0,9-fachen der Dicke der Kabelummantelung, vorzugsweise etwa das 0,5-fache beträgt.

15. Kabel-Endabschlussdichtung nach Anspruch 1, dadurch gekennzeichnet, dass die Kappe (1) an ihrer Aussenfläche (13) mit einem Profil versehen ist, das einen form- oder kraftschlüssigen Angriff von Werkzeugen und/oder den Händen eines Monteurs gestattet.

16. Kabel-Endabschlussdichtung nach Anspruch 9, dadurch gekennzeichnet, dass das Profil in axialer Richtung verlaufende Längsrippen (2) umfasst.

17. Kabel-Endabschlussdichtung nach Anspruch 1, dadurch gekennzeichnet, dass am Aussenende der Kappe (1) ein als Vier- oder Sechskant ausgebildeter Schraubansatz angeordnet ist.

18. Kabel-Endabschlussdichtung nach Anspruch 1, dadurch gekennzeichnet, dass die Kappe (1) aus Kunststoff oder Metall hergestellt ist.

19. Kabel-Endabschlussdichtung nach Anspruch 1, dadurch gekennzeichnet, dass der sich konisch verengenden Sacklochbohrung (B) der Kappe (1) an ihrer Aussenfläche (13) mit ein sich zu einer vergrösserten Einstecköffnung (30) erstreckender, konisch erweiteter Einführabschnitt (31) mit stärkerer Konizität vorgeschaltet ist.

20. Kabel-Endabschlussdichtung nach Anspruch 5, dadurch gekennzeichnet, dass das geschlossene Ende der Kappe (1) mit einem Haken, einer Öse (16) oder einem dergl. Kupplungselement zum Verbinden mit Zugkabeln versehen ist.

## Claims

1. Cable end sealing with high tensile strength for cylindrically plasticized current conductors or fiber-optical light guides (3), designed as a pneumatically tight and humidity-proof cap (1) which can be slipped on the cable end (14) to be sealed and which allows a tight connection with the cable sheathing without any fill of sealing compound,
characterized in
that the one-piece cap (1) shows a conically narrowing pocket hole bore (B) of which the opening diameter (D) is greater, and the final diameter of the pocket hole (d) is smaller than the outside diameter (4) of the cable (3) and which has been provided with a conically running internal thread (GI) whose pitch (S) is 0, 3- to 3, 0-fold the outside diameter (4) of the cable (3) and whose height of thread (5) between 0, 1- and 0, 9-fold the thickness of the cable sheathing, preferably about 0, 5-fold.

2. Cable end sealing with high tensile strength according to claim 1, characterized in that the internal thread (GI) represents a sharp-edged triangular thread having a flank angle ($\beta$) between 25° and 60°.

3. Cable end sealing with high tensile strength, according to claim 1, characterized in that one tapered segment (15) each of the conically narrowing pocket hole bore (B) is to be found between the turns spaced by the pitch (S) of the internal thread (GI).

4. Cable end sealing with high tensile strength, according to claim 1, characterized in that one of the two flanks (7) of the internal thread (GI) is joined by a flank (8) of a conically running outside thread (GA) which has been cut more deeply into the tapered pocket hole bore (B).

5. Cable end sealing with high tensile strength, according to claim 1, characterized in that the internal thread (GI) shows, at each full pitch, at least one interruption segment (9) of the raised turn (10).

6. Cable end sealing with high tensile strength, according to claim 5, characterized in that the raised turns (10) on the interruption segments (9) have, at their front end (12) seen in screw-on direction, been beveled in the shape of rockers to become cutting edges.

7. Cable end sealing with high tensile strength, according to claim 5, characterized in that the turns (10) of the internal thread (GI), on the interruption segments (9), have, at their rear end (11) seen in screw-on direction, been edged planely and perpendicular to the direction of the tangent.

8. Cable end sealing with high tensile strength, according to at least one of the claims 1 to 7, characterized in that the internal thread (GI) or the internal and external threads (GI/GA) has or have been shaped as a sharp-edged buttress thread having a flank angle between 15° and 30°.

9. Cable end sealing with high tensile strength, according to claim 5, characterized in that the conically narrowing pocket hole bore (B) shows at least one raised concentric inner ring (20) in the region of at least one interruption segment of the internal thread (GI).

10. Cable end sealing with high tensile strength, according to claim 9, characterized in that the raised inner ring (20) has a sharp edge and a flank angle (a) between 90° and 150°.

11. Cable end sealing with high tensile strength, according to claim 9, characterized in that the internal thread (GI) is sharp-edged and has a flank angle (β) between 90° and 150°.

12. Cable end sealing with high tensile strength, according to claim 9, characterized in that between at least two raised inner rings (20), an interruption segment (9) of the internal thread (GI) is provided which forms a tapered segment (15) of the conically narrowing pocket hole bore (B).

13. Cable end sealing with high tensile strength, according to claim 9, characterized in that the pitch (S) of the internal thread (GI) is 0, 25- to 1, 5-fold the outside diameter (4) of the cable (3).

14. Cable end sealing with high tensile strength, according to claim 9, characterized in that the height of thread (5) of the internal thread (GI) and the height of ridge (21) of the raised inner rings (20) amounts to between 0, 1- and 0,9-fold the thickness of the cable sheathing, preferably to about 0, 5-fold.

15. Cable end sealing with high tensile strength, according to claim 1, characterized in that the outside face (13) of the cap (1) has been provided with a profile allowing a positive or non-positive action of tools and/or the hands of a fitter.

16. Cable end sealing with high tensile strength, according to claim 9, characterized in that the profile comprises some longitudinal ribs (2) running in axial direction.

17. Cable end sealing with high tensile strength, according to claim 1, characterized in that a square or hexagon screw-on projection has been arranged at the exte rnal end of the cap (1).

18. Cable end sealing with high tensile strength, according to claim 1, characterized in that the cap (1) has been made of plastic material or of metal.

19. Cable end sealing with high tensile strength, according to claim 1, characterized in that the outside face (13) of the cap (1), with a conically narrowing pocket hole bore (B), is preceded by a conically enlarged receiving segment (31) with greater conicality, which extends to an enlarged push-in opening (30).

20. Cable end sealing with high tensile strength, according to claim 5, characterized in that the closed end of cap (1) has been provided with a hook, an eye (16) or a similar coupling element for connection with traction cables.

**Revendications**

1. Dispositif d'étanchéité résistant à la traction pour extrémité de câble destiné à des conducteurs de courant ou guides de lumière (3) cylindriquement plastifiés, dispositif réalisé comme capuchon (1) imperméable à air comprimé et à l'humidité, enfilable sur le bout de câble (14) à étancher et imperméablement reliable au revêtement de câble sans aucun remplissage de compound,
caractérisé par ce
que le capuchon (1) à pièce unique présente un alésage à trou borgne (B) qui se rétrécit coniquement, alésage dont le diamètre d'ouverture (D) est plus grand, et le diamètre final (d) plus petit que le diamètre extérieur (4) du câble (3) et qui a été doté d'un taraudage conique (GI) dont le pas (S) s'élève à 0,3 jusqu'à 3,0 fois le diamètre extérieur (4) du câble (3) et dont la hauteur de filet (5) à 0,1 jusqu'à 0,9 fois l'épaisseur du revêtement de câble, préférablement à env. 0,5 fois autant.

2. Dispositif d'étanchéité résistant à la traction pour extrémité de câble selon revendication 1, caractérisé par ce que le taraudage (GI) représente un filet triangulaire à bords vifs ayant un angle de flanc (β) entre 25° et 60°.

3. Dispositif d'étanchéité résistant à la traction pour extrémité de câble selon revendication 1, caractérisé par ce qu'il y a chaque fois un segment conique (15) de l'alésage effilé à trou borgne (B), entre les spires écartées par le pas (S) du taraudage (GI).

4. Dispositif d'étanchéité résistant à la traction pour extrémité de câble selon revendication 1, caractérisé par ce que l'un des deux flancs (7) du taraudage (GI) est suivi de l'un des flancs (8) du filet extérieur (GA) à allure conique et coupé plus profondément dans l'alésage conique à trou borgne (B).

5. Dispositif d'étanchéité résistant à la traction pour extrémité de câble selon revendication 1, caractérisé par ce que le taraudage (GI) présente sur chaque pas de filetage complet, au moins un seul segment d'interruption (9) de la spire saillante (10).

6. Dispositif d'étanchéité résistant à la traction pour extrémité de câble selon revendication 5, caractérisé par ce qu'avec les segments d'interruption (9), les spires saillantes (10), soit à leur bout frontal (12) vu en direction de vissage, ont été chanfreinées en forme de barre comme des taillants.

7. Dispositif d'étanchéité résistant à la traction pour extrémité de câble selon revendication 5, caractérisé par ce qu'avec les segments interruption (9), les spires (10) du taraudage (GI), soit à leur bout arrière (11) vu en direction de vissage, ont été bordées en nappe et perpendiculairement à la direction de tangente.

8. Dispositif d'étanchéité résistant à la traction pour extrémité de câble selon au moins une seule des revendications 1 à 7, caractérisé par ce que le taraudage (GI) a, ou ce dernier et le filet extérieur (GI/GA) ont été formés comme filet en dent de scie à bords vifs avec un angle de flanc entre 15° et 30°.

9. Dispositif d'étanchéité résistant à la traction pour extrémité de câble selon revendication 5, caractérisé par ce que dans la zone d'au moins un seul segment d'interruption du taraudage (GI), l'alésage à trou borgne (B) qui se rétrécit coniquement, comporte au moins une seule bague intérieure saillante et concentrique (20).

10. Dispositif d'étanchéité résistant à la traction pour extrémité de câble selon revendication 9, caractérisé par ce que la bague intérieure saillante (20) a été dotée des bords vifs, bague ayant un angle de flanc (a) entre 90° et 150°.

11. Dispositif d'étanchéité résistant à la traction pour extrémité de câble selon revendication 9, caractérisé par ce que le taraudage (GI) représente un filet à bords vifs avec un angle de flanc (β) entre 90° et 150°.

12. Dispositif d'étanchéité résistant à la traction pour extrémité de câble selon revendication 9, caractérisé par ce qu'entre au moins deux bagues intérieures saillantes (20), on a prévu un segment d'interruption (9) du taraudage (GI) formant un segment conique (15) de l'alésage effilé à trou borgne (B).

13. Dispositif d'étanchéité résistant à la traction pour extrémité de câble selon revendication 9, caractérisé par ce que le pas (S) du taraudage (GI) s'élève à 0,25 jusqu'à 1,5 fois le diamètre extérieur (4) du câble (3).

14. Dispositif d'étanchéité résistant à la traction pour extrémité de câble selon revendication 9, caractérisé par ce que la hauteur de filet (5) du taraudage (GI) et la hauteur de crête (21) des bagues intérieures saillantes (20) représentent entre 0, 1 et 0,9 fois l'épaisseur du revêtement de câble, préférablement env. 0,5 fois autant.

15. Dispositif d'étanchéité résistant à la traction pour extrémité de câble selon revendication 1, caractérisé par ce que la face extérieure (13) du capuchon (1) a été dotée d'un profil permettant l'action positive ou non-positive des outils et/ou des mains d'un monteur.

16. Dispositif d'étanchéité résistant à la traction pour extrémité de câble selon revendication 9, caractérisé par ce que le profil comporte des nervures longitudinales (2) disposées en direction axiale.

**17.** Dispositif d'étanchéité résistant à la traction pour extrémité de câble, selon revendication 1, caractérisé par ce qu'une saillie de vissage, réalisé comme élément carré ou hexagonal, se trouve au bout extérieur du capuchon (1).

**18.** Dispositif d'étanchéité résistant à la traction pour extrémité de câble selon revendication 1, caractérisé par ce que le capuchon (1) a été fabriqué en matière synthétique ou en métal.

**19.** Dispositif d'étanchéité résistant à la traction pour extrémité de câble selon revendication 1, caractérisé par ce que la face extérieure (13) du capuchon (1) comportant un alésage effilé à trou borgne (B), est précédée d'un segment d'introduction (31) coniquement élargi et s'étendant jusqu'une ouverture à emboîtement (30) plus grande, segment présentant une conicité plus prononcée.

**20.** Dispositif d'étanchéité résistant à la traction pour extrémité de câble selon revendication 5, caractérisé par ce que le bout fermé du capuchon (1) a été muni d'un crochet, d'un oeil (16) ou d'un autre élément de couplage semblable pour la liaison avec des câbles de traction.

Fig.1

Fig.2

Fig.3

Fig.4

Fig.5

Fig. 6

Fig.7